# EUROPEAN PATENT SPECIFICATION

(11) **EP 2 740 202 B1**
(45) Date of publication and mention of the grant of the patent: **17.06.2015**
(21) Application number: 12740514.0
(22) Date of filing: 02.07.2012
(51) Int. Cl.: H02M 1/12, H02P 27/16, H02M 5/297, H02M 7/483, H02M 7/487, H02P 27/06

(54) **TRANSFORMERLESS MULTILEVEL CONVERTER**
TRANSFORMATORLOSER MEHRPEGELUMRICHTER
CONVERTISSEUR MULTINIVEAU SANS TRANSFORMATEUR

(30) Priority: 04.08.2011 EP 11176607
(43) Date of publication of application: 11.06.2014
(73) Proprietor: ABB Technology AG, 8050 Zürich (CH)
(72) Inventor: STEIMER, Peter, CH-5420 Ehrendingen (CH)
(74) Representative: ABB Patent Attorneys
(86) International application number: PCT/EP2012/062828
(87) International publication number: WO 2013/017353

(56) References cited:
- EP-A1- 1 806 833
- JP-A- 2005 204 438
- JP-A- 2007 325 377
- JP-A- 2009 148 078
- JP-A- 2010 148 259
- US-A- 5 644 483
- WEI-DONG JIANG ET AL: "Hybrid PWM Strategy of SVPWM and VSVPWM for NPC Three-Level Voltage-Source Inverter", IEEE TRANSACTIONS ON POWER ELECTRONICS, IEEE SERVICE CENTER, PISCATAWAY, NJ, US, vol. 25, no. 10, 1 October 2010 (2010-10-01), pages 2607-2619, XP011319439, ISSN: 0885-8993

## Description

### FIELD OF THE INVENTION

The invention relates to the field of power electronics circuits. The invention relates to a medium voltage system with a multilevel converter.

### BACKGROUND OF THE INVENTION

Medium voltage systems with a multilevel converter are used for converting a first current from a power grid into a second current that may be supplied to a further grid or an electrical motor, or may be supplied from a generator into the power grid.

Most of today's general purpose medium voltage systems are using an isolation transformer, which often has a very low efficiency (as low as 97 % at 1 MVA) due to costs and size requirements.

In US 5,625,545 it is shown that this may even be the case, if the grid voltage matches a voltage to be supplied to an electrical motor.

In transformerless medium voltage systems, the inherently available common mode impedance of the isolation transformer is typically replaced by common mode impedances, for example see "An Integrated DC Link Choke for Elimination of Motor Common mode Voltage in Medium Voltage Drives" Bin Wu, S. Rizzo, N. Zargari and Y. Xiao, IAS 2001 and "Medium voltage AC drive, ACS 2000", ABB Product Brochure, 2010. The published european patent application EP1806833A1 discloses a three phase star connected capacitive fetter.

### DESCRIPTION OF THE INVENTION

It may be an object of the invention to provide a simple common mode grounding for a transformerless medium voltage system with a multilevel converter.

This object is achieved by the subject-matter of the independent claim. Further exemplary embodiments are evident from the dependent claims and the following description.

The invention relates to a medium voltage system. It has to be understood that a medium voltage system may be an electrical system that is adapted to process voltages above 1 kV and/or below 50 kV, for example below 15 kV.

According to an embodiment of the invention, the medium voltage system comprises a multilevel converter connected to a grid connection, wherein the multilevel converter is adapted for converting a first multiphase current provided at the grid connection into a second current, and a common mode filter, which, for each phase of the first current, comprises a phase filter connected to the respective phase. The phase filters of the common mode filter are connected to a common filter star point which is connected to ground. Each phase filter comprises a capacity, i. e. at least one capacitor. The medium voltage system may only be connected to ground at the grid side via the common filter star point.

A multilevel converter may be an electrical converter that is adapted to generate more than two or three output voltage levels, for example 5, 7, or more voltage output levels. In other words, the second current may have more than three output voltage levels.

The first multiphase current may be an AC current with more than two phases. For example, the first multiphase current may have two or three phases.

The multilevel converter may be directly connected to the grid connection, in particular without a transformer. The multilevel system may be transformerless on the grid side.

The grid connection may be the point of common coupling (PCC), which may be defined as point where the medium voltage system as local electric power system is connected to a large (non-local) power grid.

With the common mode filter, in a transformerless medium voltage system, any common mode inductors may be avoided. By introducing a small capacitive common mode filter on the grid side of the medium voltage system with a low impedance ground connection at the star point, a dominant common mode voltage capacitive coupling to ground may be achieved. No significant common mode voltages or currents may reach the grid in low and high impedance grounded systems.

When the medium voltage system comprises an electrical machine supplied with the second current, the additional common mode stress on the medium voltage machine windings and related bearing current effects may be well under control even for standard electrical machines and retrofit applications.

The solution may be applied to any multilevel converter with any multilevel topology (VSI with 7 levels and higher) by common mode grounding the system close to the PCC (point of common coupling). Common mode impedances may be eliminated without endangering the winding insulation or the bearing lifetime of the electrical machine or the requirements of the grid connection.

In a two- or three-phase system, the common mode filter, which may provide a low impedance grounding, may comprise a rather small two-phase or three-phase capacitive filter on the grid side. The capacitive filter may comprise two or three capacitors with equal capacity connected at the star point.

The common mode filter may have a capacity which is about 10 times bigger than any machine side capacitive ground impedance, which may be a machine side filter, a machine side cable, or the machine winding capacitance to ground.

Furthermore, the small capacitive common mode filter on the grid side may be a tuned filter and may comprise further inductivities and/or resistors.

According to an embodiment of the invention, each phase filter comprises an inductivity connected in series with the capacity and/or a resistor connected in series with the capacity. The inductivity and the resistor may be connected in parallel. Such a tuned filter design may have the additional advantage that a resulting differential mode resonance on the grid side may be less variable, which may facilitate the robust realization of the active damping of grid-side resonances or harmonic rejection by the converter.

According to an embodiment of the invention, the common mode filter comprises an impedance between the filter star point and the ground. The solid connection of the filter star point or common point to ground may include some additional impedance. This impedance may be of resistive, capacitive or inductive type and/or may comprise capacitors, inductivities and resistors in series or in parallel. Such an additional impedance may offer some additional benefits in regards of lower ground currents or ground fault selectivity, especially for parallel connected systems.

According to an embodiment of the invention, the common mode filter, for each phase, comprises an inductivity connected between the grid connection and the multilevel converter. The common mode filter may be combined with other filters on the grid side that are not grounded.

According to an embodiment of the invention, a connection point of a phase filter to the respective phase is between the grid connection and the inductivity between the grid connection and the multilevel converter. These additional filters may be between the basic common mode filter and the multilevel converter. The connection of the common mode filter may be directly at the grid connection and/or may be near the point of common connection (PCC).

The common mode filter may be applied to transformerless medium voltage drives, transformerless wind power system, transformerless solar systems and/or transformerless interties.

According to an embodiment of the invention, the medium voltage system comprises an electrical motor for receiving the second current. The medium voltage system may be a medium voltage drive.

According to an embodiment of the invention, the medium voltage system comprises an electrical generator for generating the second current. For example, the medium voltage system may be part of a tidal power station or a wind power station.

According to an embodiment of the invention, the medium voltage system comprises a DC source for providing the second current. For example, the DC source may be a DC link or at least one solar panel. The medium voltage system may be a solar power station.

According to an embodiment of the invention, the medium voltage system comprises a transformer for transforming the second current. It has to be understood that the medium voltage system only may be transformerless at the grid side. On the machine side, the medium voltage system may comprise one or more transformers between the multilevel converter and the electrical machine or generator connected to the second current.

The medium voltage system may comprise any kind of VSI based multilevel converter, as for example for an ANPCML converter, a direct and indirect MMLC converter, such as chain link type STATCOMs (with full bridges).

According to an embodiment of the invention, the multilevel converter is an ANPCML (active neutral point clamped multi-level) converter.

According to an embodiment of the invention, the multilevel converter is an indirect MMLC (modular multilevel) converter. The common mode filter may be used with two quadrant (2Q) or with four quadrant (4Q) medium voltage power conversion, i. e. with a multilevel converter comprising a rectifier and an inverter, wherein the inverter and optionally the rectifier comprise power modules of an MMLC converter. However, the rectifier may be a passive rectifier or diode frontend.

According to an embodiment of the invention, the multilevel converter is a direct MMLC converter.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a circuit diagram with low impedance grounding in a grid.
Fig. 2 shows a circuit diagram with high resistance grounding in a grid.
Fig. 3 shows a schematic diagram of a medium voltage system according to an embodiment of the invention.
Fig. 4 shows a schematic diagram of a medium voltage system according to a further embodiment of the invention.
Fig. 5 shows a schematic diagram of a medium voltage system according to a further embodiment of the invention.
Fig. 6 shows a schematic diagram of a medium voltage system according to a further embodiment of the invention.
Fig. 7 shows a schematic diagram of a medium voltage system according to a further embodiment of the invention.
Fig. 8 shows a schematic diagram of a medium voltage system according to a further embodiment of the invention.
Fig. 9 shows a schematic diagram of a medium voltage system according to a further embodiment of the invention.
Fig. 10 shows a schematic diagram of a medium voltage system according to a further embodiment of the invention.
Fig. 11 shows a schematic diagram of a medium voltage system according to a further embodiment of the invention.
Fig. 12 shows a common mode equivalent circuit of a medium voltage system according to a further embodiment of the invention.
Fig. 13 shows a circuit diagram for a cable model that may be used for a simulating medium voltage system according to an embodiment of the invention.
Fig. 14 shows a circuit diagram for a model of an electrical machine that may be used for a simulating medium voltage system according to an embodiment of the invention.
Fig. 15 shows a circuit diagram for an ANPCML inverter for a medium voltage system according to an embodiment of the invention.
Fig. 16 shows a circuit diagram for an indirect MMLC inverter for a medium voltage system according to an embodiment of the invention.
Fig. 17 shows a circuit diagram for a direct MMLC converter for a medium voltage system according to an embodiment of the invention.
Fig. 18 shows a schematic diagram of a medium voltage system according to a further embodiment of the invention.
Fig. 19 shows a schematic diagram of a medium voltage system according to a further embodiment of the invention.
Fig. 20 shows a schematic diagram of a medium voltage system according to a further embodiment of the invention.
Fig. 21 shows a diagram with a common mode voltage at the grid side of a low impedance grounded system according to an embodiment of the invention.
Fig. 22 shows a diagram with a common mode voltage at the grid side of a high impedance grounded system according to an embodiment of the invention.
Fig. 23 shows a diagram with a common mode voltage at the PCC of a system according to an embodiment of the invention.
Fig. 24 shows a diagram with a common mode voltage at the machine star point of a system according to an embodiment of the invention.

In principle, identical parts are provided with the same reference symbols in the figures.

### DETAILED DESCRIPTION OF EXEMPLARY EMBODIMENTS

### Grounding concepts in medium voltage grids

For example, to reduce transient over-voltages, either solid or impedance grounding is used. A grounded system may have the further advantage that ground fault localization is possible.

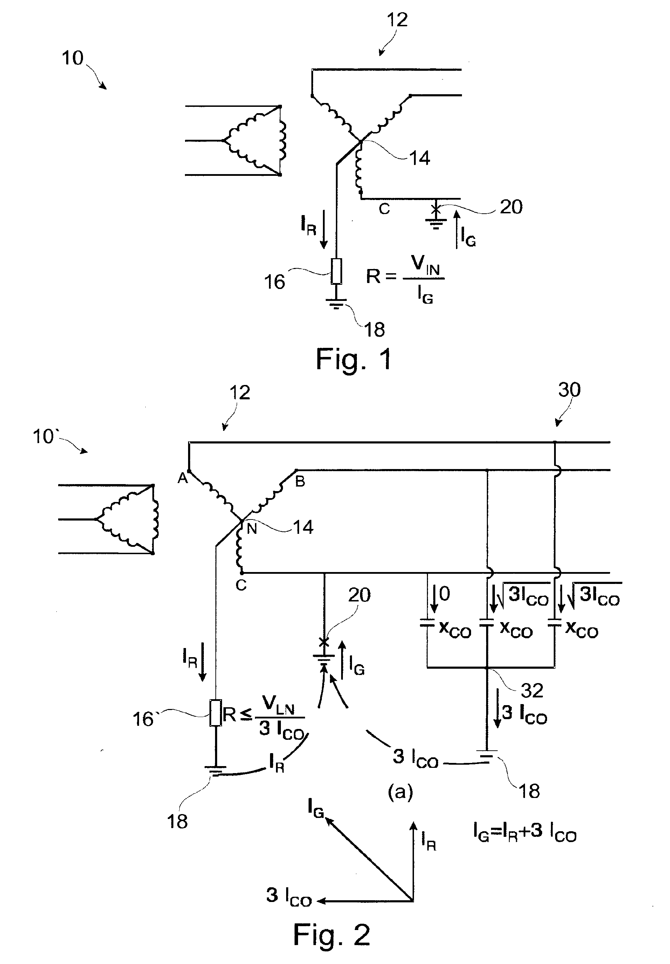

Fig. 1 shows a circuit diagram with low impedance grounding in a grid. The system 10 comprises a transformer 12, which has windings interconnected in a star point 14. The star point 14 is connected via a low impedance 16 to the ground 18. In the case of a ground fault 20, a grounding current I_{G} may be equalized via the low impedance 16.

Fig. 2 shows a circuit diagram with high resistance (i. e. high impedance) grounding in a grid. In the system 10', the star point 14 of the transformer 12 is connected via a high impedance 16' to the ground 18.

The system 10' further comprises a common mode filter 30 with three capacitors X_{CO} interconnected by a common filter star point 32. A common mode current I_{CO}, generated by an earth fault 20 may be equalized by the common mode filter 30.

The resistor 16' is selected such that the current I_{R} through the resistor, the grounding current I_{G} and the common mode current I_{CO} cancel each other.

In general, the following impedance grounding concepts are typically used in medium voltage distribution grids up to 15 kV:
- low impedance grounding (to limit ground fault current I_{G} between 100 A to 1000 A),
- high impedance grounding (to limit the resistor current I_{R} to typically 10 A or less),
- reactance grounding (if the desired current magnitude is several thousand amperes), and
- resonant grounding (ground fault neutralizer).

In the following, for the transformerless medium voltage systems shown in the following figures, low and high impedance grounding is investigated, as they may be seen as the two extremes in regards of the grounding impedance.

### Medium voltage systems with multilevel converter

The following figures show medium voltage systems 40 with a multilevel converter 42 that all comprise a common mode filter 30.

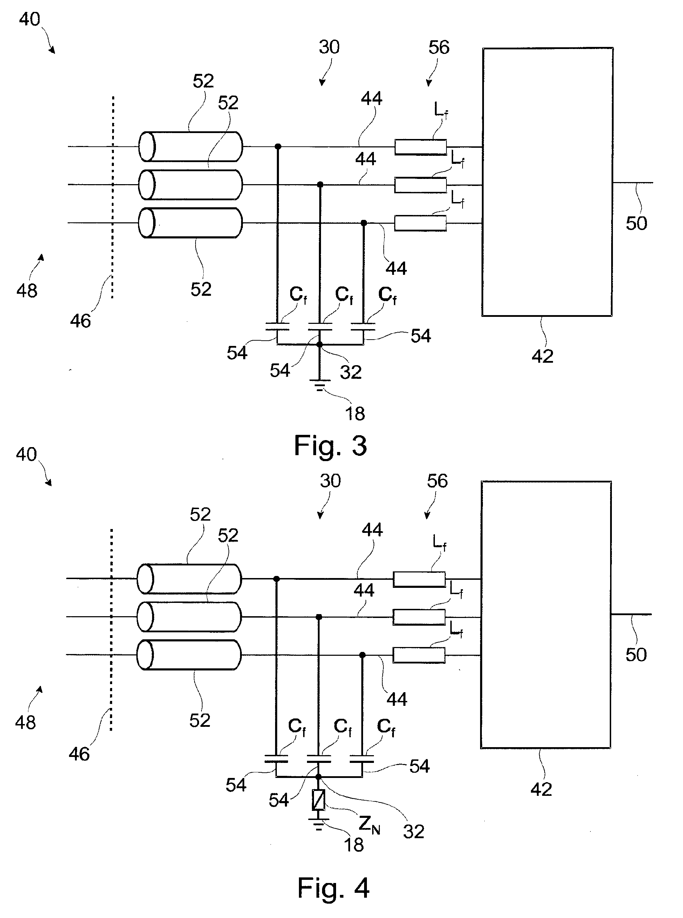

In particular, the system 40 of Fig. 3 comprises a multilevel converter 42 that is connected via three phases 44 to a grid connection 46. The grid connection 46 may be the point of common coupling interconnecting the medium voltage system 40 with an electrical grid 48.

The multilevel converter 42 is adapted to convert a first multiphase current in the phases 44 into a second current to be supplied to a further electrical connection 50.

At the grid side, the system 40 comprises a common mode filter 30, which comprises three capacitors C_{f} that, at one end, are connected to a respective phase 44 and, at another end, are commonly connected to a star point 32. Only the star point 32 of the system 40 is grounded. Each capacitor C_{f} may be seen as a phase filter 54 for the respective phase 52.

The system 40 may be connected to the grid connection 46 by a set of medium voltage cables 52. The filter 30 may be connected to the phases 44 after the cables 52. Furthermore, the system 40 may comprise a further grid side filter 56, which comprises an inductivity L_{f} for each phase 44 and which is interconnected between the common mode filter 30 and the multilevel converter 42. The inductivity L_{f} may be seen as a part of the respective phase filter 54.

Fig. 4 shows a further embodiment of a system 40. The common mode filter 30 may further comprise an impedance Z_{N} connected between the star point 32 and the ground 18.

In this case, the solid connection of the filter star point 32 or common point 32 to ground 18 may comprise some additional impedance Z_{N}. This impedance Z_{N} may be of resistive, capacitive or inductive type or combinations of multiple such elements in series or in parallel.

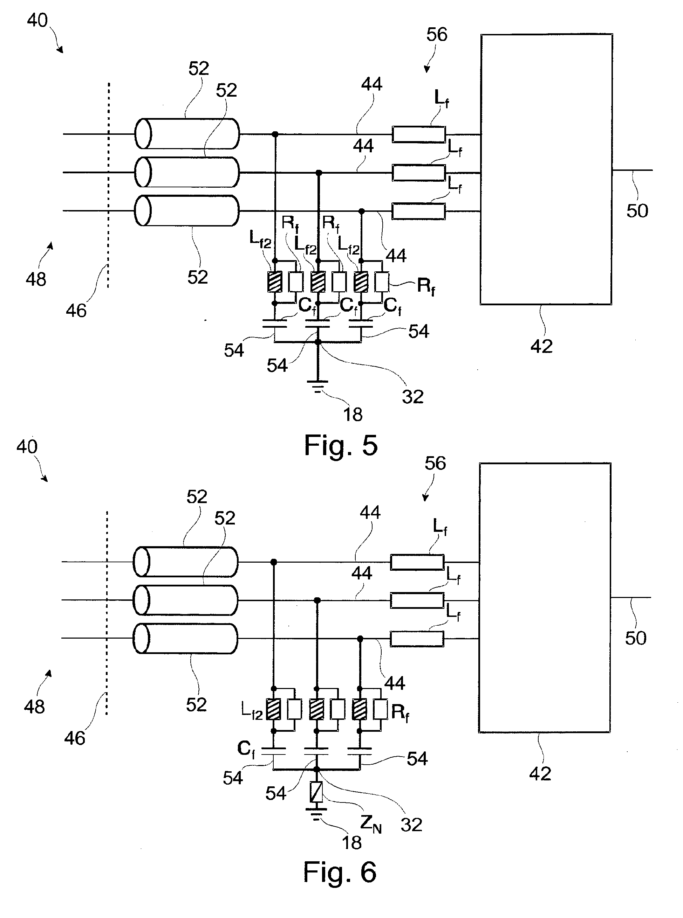

Fig. 5 shows a further embodiment of a system 40. The common mode filter 30 may be a tuned filter 30 at the grid side. Each phase filter 54 of the common mode filter 30 comprises an inductivity L_{f2} and a resistor R_{f} connected in parallel, which are connected in series with the capacitor C_{f}.

The small capacitive common mode filter 30 may be tuned to keep the resulting differential mode resonance on the grid side less variable and to facilitate the robust realization of the active damping of grid side resonances or harmonic rejection by the converter 42.

Fig. 6 shows a further embodiment of a system 40. A tuned common mode filter 30 may be combined with the impedance Z_{N} in the ground connection.

The common mode filter 30 may be applied to transformerless power electronics systems, like transformerless grid couplings or transformerless grid interfaces for renewable energy sources.

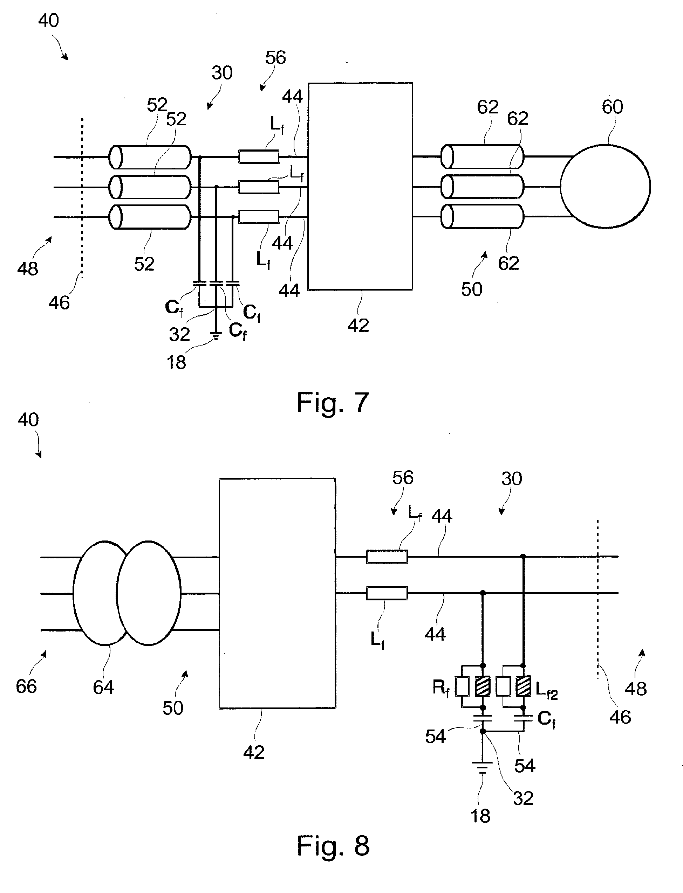

Fig. 7 shows a further embodiment of a system 40. The system 40 may comprise an electrical motor 60 that is connected via the second connection 50 to the multilevel converter 42. The second connection 50 may be a multiphase connection (in the present case a three-phase connection) also comprising a set of medium voltage cables 62.

Fig. 8 shows a further embodiment of a system 40. The system 40 may comprise a transformer 64 that is connected via the second connection 50 to the multilevel converter 42. For example, the system 40 may be an intertie between an electrical grid 48 and an electrical grid 66.

Fig. 8 further shows that the connection between the grid 48 and the multilevel converter 42 may be a two-phase connection. The common mode filter 30 may only comprise two-phase filters 54.

The system 40 of Fig. 8 may be seen as a transformerless grid coupling from three-phase to one- or two-phase. It has to be noted that the system 40 is only transformerless at the side with the common mode filter 30.

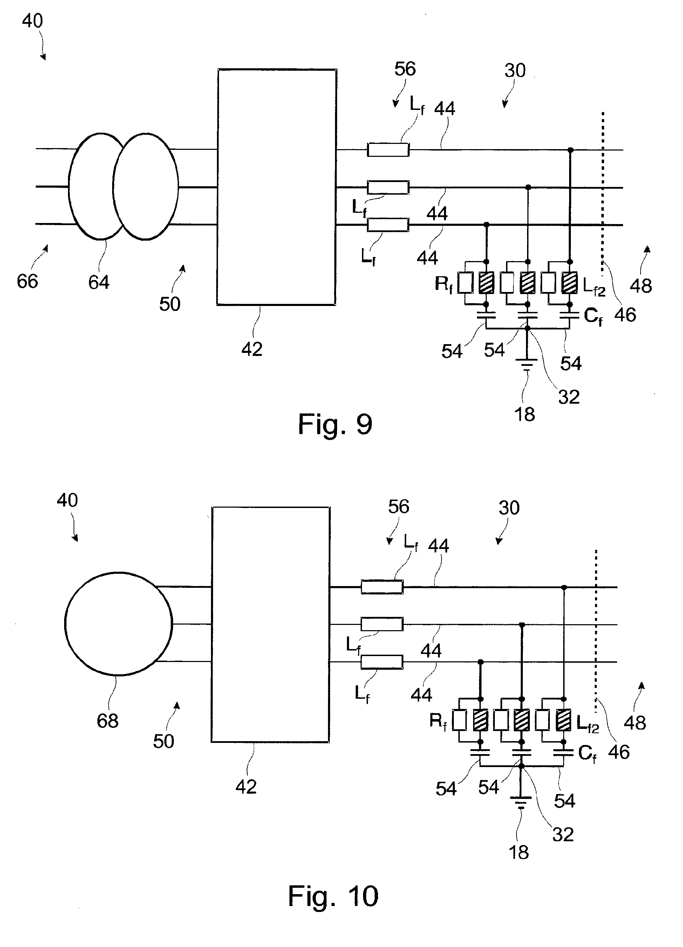

Fig. 9 shows a further embodiment of a system 40 that may be seen as a transformerless grid coupling from three-phase to three-phase.

Fig. 10 shows a further embodiment of a system 40 with a (rotating) electrical generator 68. For example, the generator 40 may be connected to a turbine of a water or tidal power station or to a wind turbine.

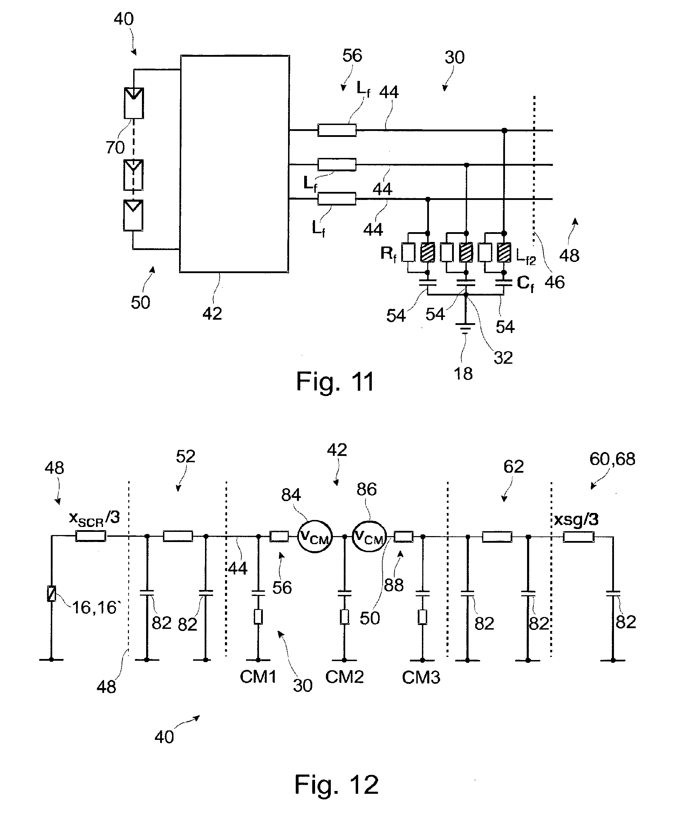

Fig. 11 shows a further embodiment of a system 40, in which the multilevel converter 50 is connected to solar panels 70. The connection 50 may be a DC current connection.

### Grounding of a transformerless medium voltage drive

Fig. 12 shows a common mode equivalent circuit of a medium voltage system 40. In regards of common mode effects, the grounding concept of the medium voltage system 40 itself is of central interest. For the relevant common mode investigations of the medium voltage system 40, the corresponding common mode equivalent circuit as shown in Fig. 12 can be used.

The neutral grounding resistance 16, 16' of the feeding medium voltage grid 48 and the capacitive impedances 82 may be of importance, which are pulling the main circuits closer to ground (high frequency equivalents). Capacitive impedances 82 of relevance are typically those of power cables 52, 62 and machine windings of the electrical machine 60, 68.

Fig. 12 further shows a grid side filter 56 and a machine side filter 88, which may be a dv/dt filter.

It may be assumed, that other differential mode harmonic requirements are met by the multilevel converter 42.

As shown in Fig. 12, there are three possibilities to ground a medium voltage system 40:
- on the grid side (CM1),
- on the neutral-point of the converter (CM2), or
- on the machine side CM3).

Historically, the CM2 grounding in the DC link of the power conversion system has been preferred, as the common mode equivalent voltage sources of the AC to DC power conversion (rectifier) stage 84 or DC to AC power conversion (inverter) stage 86 are separated, and any movement to ground is limited to the amplitude of one equivalent common mode voltage source (and not the sum of it). The CM3 grounding has been typically preferred in cases, where the main objective has been to keep any common mode voltage movement away from the electrical machine 60, 68.

For the realization of a transformerless medium voltage drive system 40, it has to be noted, that the electric coupling to the grid 48 is changing fundamentally. An isolation transformer, which has a high common mode impedance to the grid 48, is disappearing. The common mode stresses (voltage, currents) that are applied by the converter 42 to the grid 48 are getting more important.

This may be solved by grounding at CM3 or CM2 and by using an additional common mode impedance between the converter 42 and the grid 48, to limit the amount of common mode voltages and/or current, reaching the medium voltage grid.

However, with the medium voltage system 40 shown in Figs. 3 to 11, CM1 is used as the grounding point. This may efficiently limit any common mode voltage or current stress reaching the grid 48. Additionally, this new concepts avoids any common mode reactors, which may be an advantage with respect to costs and size.

Large machine winding capacitances 82, machine side cable capacitances 82 and machine side (dv/dt) filters 88 may be the dominant common mode capacitive impedances to ground. They may therefore ground the common voltage system, especially for higher frequencies, at the machine side. In such a case all, the common mode voltages (and thereby generated common mode currents) would appear at the grid side.

This is avoided by a dominant common mode capacitive impedance 30 to ground 18 at the grid side, at CM1. With this measure, the common mode stress may be shifted to the machine side, which may limit the common mode stress on the grid side. This additional machine side common mode stress is acceptable, even for standard electrical machines 60, 68 including retrofit applications.

By grounding the medium voltage system 40 at CM1, any additional common mode impedance can be avoided. As explained with respect to Fig. 3 to 11, the (low impedance) grounding may be done on the grid side at the star point 32 of a small three-phase capacitive filter C_{f}. This three-phase capacitive filter 30 creates a common mode impedance to ground of 3 x C_{f}.

The installed grid-side common mode capacitance (= 3 x C_{f}), which may include the grid-side cable capacitances 82 to ground 18, may be substantially larger than the machine side capacitances 82 to ground, which may comprise capacitances of windings of the machine 60, 86, of cables 62 and/or of dv/dt filters 88. This may allow achieving a dominant common mode grounding on the grid side, which helps to keep common mode harmonic distortion away from the grid 48.

### Medium voltage cables

For the investigation of the medium voltage system 40 it is beneficial to know the data of typical medium voltage cables 52, 62, as they may introduce considerable capacitance and additional resonance frequencies. A higher voltage design may be chosen to represent the worst case of the influence of the cables 52, 62. On the other side, the lengths of the cables 52, 62 are usually limited to 200 m on both sides of the multilevel converter 42. Longer cables 52, 62 may be possible.

The following table shows medium voltage data for a 12/20 kV XPLE cable:

| Cable data (Copper) - XLPE - 12/20 kV - 1 or 3 wire | | |
|---|---|---|
| Area | 50 | [mm²] |
| Rating | 220 | [A] |
| Resistance DC@20°C | 0.387 | [Ω/ km] |
| Resistance DC@90°C | 0.493 | [Ω/ km] |
| Capacitance | 0.17 | [µF/km] |
| Inductance | 0.44 | [mH/km] |

For a 200 m cable (for a 200 A current rating) we get the following values per single phase cable:
R_cable = 100 mOhm = 0.5 Ohm/5
L_cable = 87 µH = 0.44 mH/5
C_cable = 34 nF = 0.17 µH/5

Fig. 4 shows a circuit diagram for a one phase equivalent cable model that may be used for medium voltage cable simulation. The cable 52, 62 comprises a plurality of sections 90 that are connected in series. Each section comprises a capacitor 92, interconnecting two lines 94, 96 of the cables 52, 62 and an inductivity 98 connected in series with a resistor 100 in one of the lines 94.

### Medium voltage machine

As an example, the data of two medium voltage electrical machines 60, 68 is given in the following. The shown winding capacitance is the total value given for all three phases of an electrical AC machine 60, 68.

The following table shows data for a 2 MVA, 6 pole, 50 Hz electrical machine 60, 68.

| | | |
|---|---|---|
| VLL | 6600 | [V] |
| V_phase | 3811 | [V] |
| IL | 175 | [A] |
| S | 2000 | [kVA] |
| L_stray | 10.40 | [mH] |
| Cwind_tot | 0.15 | [µF] |
| fres | 7103 | [Hz] |

The following table shows data for a 4.75 MVA, 6 pole, 50 Hz electrical machine 60, 68.

| | | |
|---|---|---|
| VLL | 6600 | [V] |
| V_phase | 3811 | [V] |
| IL | 416 | [A] |
| S | 4750 | [kVA] |
| L_stray | 4.38 | [mH] |
| Cwind_tot | 0.25 | [µF] |
| fres | 8269 | Hz] |

Of special interest is the resulting resonance frequency fres (which is the machine winding resonance) in the electrical machine 60, 68 given by the machine internal stray impedances L_stray (for high frequencies) and the winding capacitance Cwind_tot.

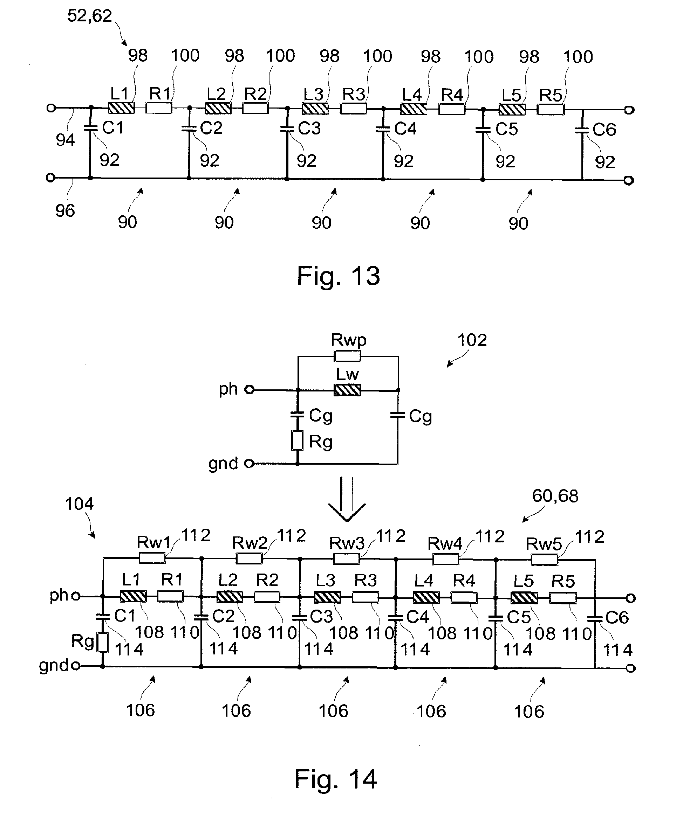

Fig. 14 shows a simplified high frequency model of the electrical machine 60, 68 that has been derived from the data of the above tables. The stray impedance L_stray and the total winding capacitance Cwind_tot are distributed within the high frequency model, which is very similar to the cable model shown in Fig. 13.

A simple model 102 of the windings of the electrical machine 60, 68, which are interconnecting a phase ph with a grounding point gnd, comprise a resistance Rwp and an inductivity Lw connected in parallel. At each end, the resistance Rwp and an inductivity Lw are connected via a capacity Cg to the grounding point Cg. At one end, the connection is via a grounding resistance Rg.

From the simple model 102, a circuit model 104 for simulation is derived which is shown below the simple model. The circuit model 104 comprises a plurality of sections 106 that are connected in series. Each section 106 comprises an inductivity 108 connected in series with a first resistor 110, which are both connected in parallel with a second resistor 112. Each section 106 comprises a capacitor 114 interconnecting the components 108, 110, 112 with the grounding point gnd.

### Medium voltage multilevel converter

For the medium voltage power conversion, several multilevel topologies for the converter 42 may be used.

The following examples are shown as five-level converters 42, but all of them may be expanded to a higher number of levels.

As indicated in Fig. 12, the converter 42 may comprise an inverter 86 that may be combined with a rectifier 84 for a back to back AC/DC/AC system, which may be used for a multilevel converter 42 for a transformerless medium voltage drive system 40.

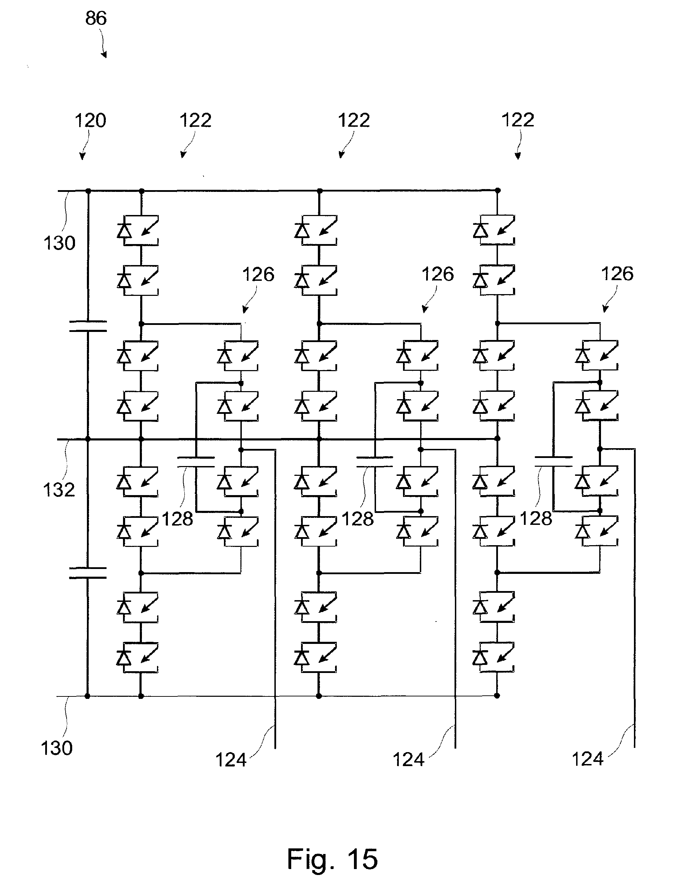

Fig. 15 shows an ANPCML (active neutral point clamped multilevel) inverter 86, that comprises a DC link 120 and three phase branches 122 that are adapted to generated a five-level output voltage at the respective phase output 124. Each phase branch 124 comprises inverter cells 126 that may comprise an internal capacitor 128, i. e. a capacitor 128 that is not directly connected to the DC link inputs 130 or the neutral point 132.

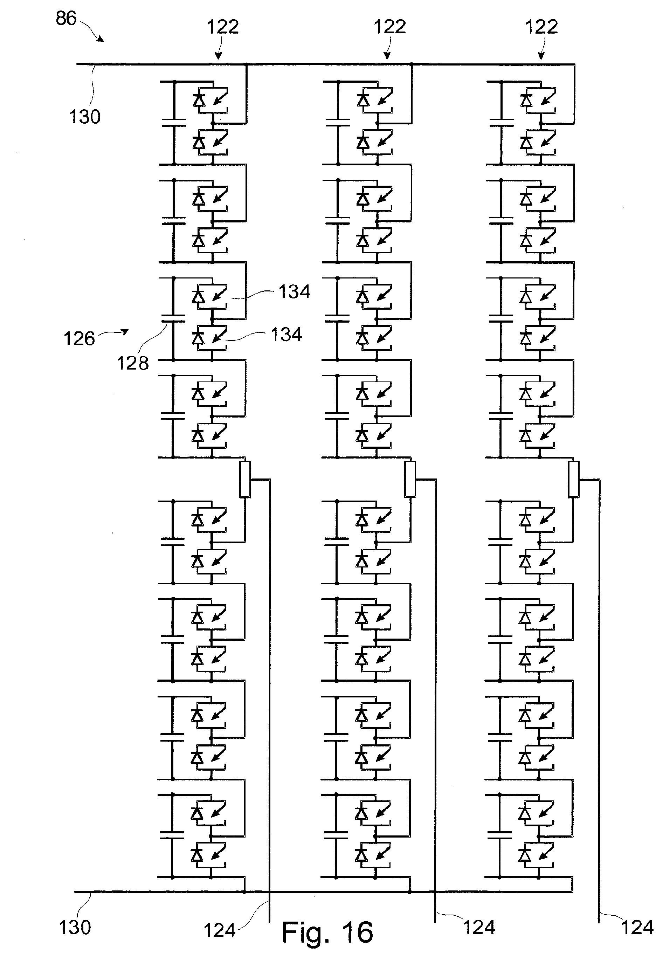

Fig. 16 shows an MMLC (modular multilevel) inverter 86, that comprises three multilevel phase branches 122 that are adapted to generated a five-level output voltage at the respective phase output 124. Each branch comprises a plurality of inverter cells 126 that are connected in series. Each inverter cell 126 comprises an internal capacitor 128 that is connected in parallel to two semiconductor switches 134.

The MMLC inverter 86 may be combined with a rectifier 84 to an indirect MMLC converter 42.

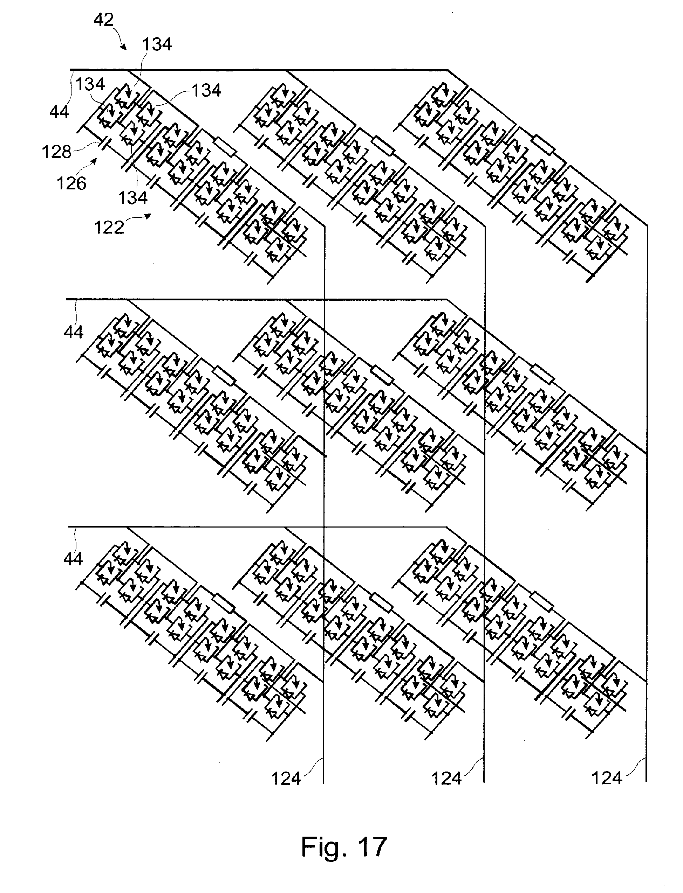

Fig. 17 shows a direct MMLC converter 42 that comprises nine multilevel branches 122 that are adapted to directly convert the phase voltages from the phases 44 into the voltages at the phase outputs 124. Each branch comprises a plurality of inverter cells 126 that are connected in series. Each inverter cell 126 comprises an internal capacitor 128 that is connected in parallel to two pairs of semiconductor switches 134.

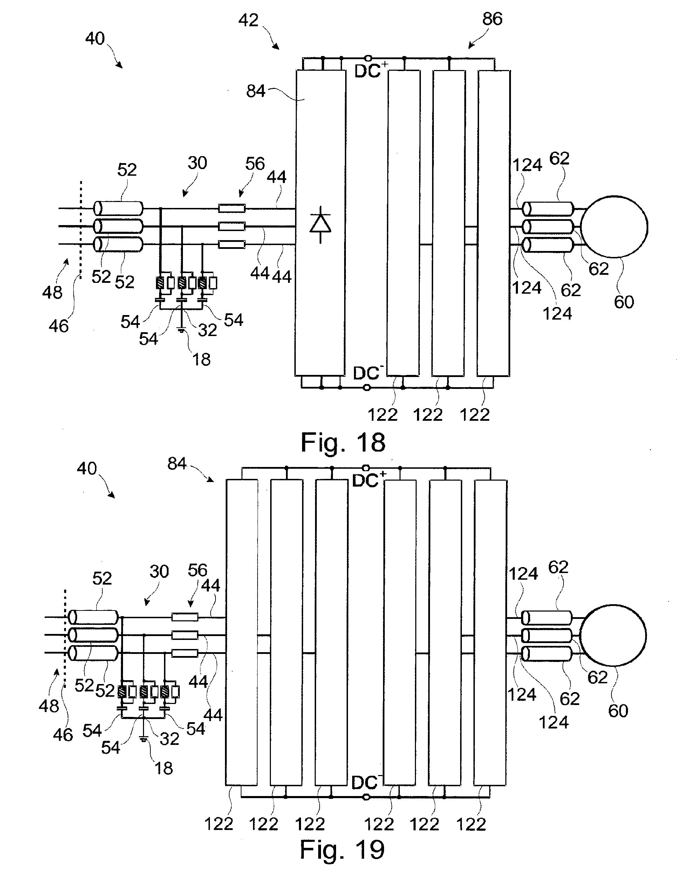

Fig. 18 shows a medium voltage system 40 with an MMLC inverter 86 as shown in Fig. 16. The converter 42 comprises a passive diode rectifier 42 that is supplied by the phases 44 for generating a DC current that is supplied to the multilevel branches 122 of the inverter 126. The converter 42 of Fig. 18 is a two quadrant (2Q) converter 42.

Fig. 19 shows a medium voltage system 40 with an MMLC inverter 86 as shown in Fig. 16. Contrary to Fig. 18, in Fig. 19 the rectifier is also an MMLC inverter as shown in Fig. 16. Three further multilevel branches 122 are used for rectifying the current from the phases 44. The converter 42 of Fig. 18 is a four quadrant (4Q) converter 42.

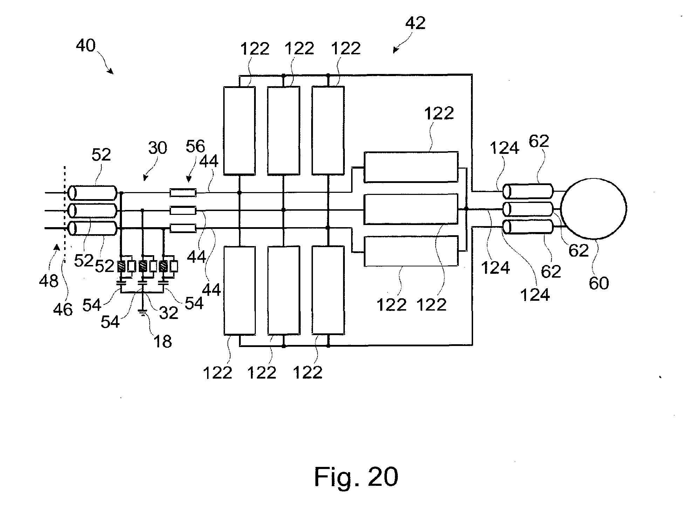

Fig. 20 shows a medium voltage system 40 with a direct MMLC inverter 86 as shown in Fig. 17.

### Transformerless medium voltage multilevel systems

For the investigation and simulation of the transformerless medium voltage system 40, earthed on the grid side at the star point 32 of a common mode filter 30 with dominant capacitive filter network, a four quadrant, seven-level converter 42 has been selected.

The following table shows data of a system 40 and of a common mode filter 30.

| | | |
|---|---|---|
| VLL | 3300 | [V] |
| IL | 200 | [A] |
| S | 1143 | [kVA] |
| fN | 50 | [Hz] |
| L_{f} | 2.4 | [mH] |
| C_{f} | 16.7 | [µF] |

As indicated in the table, a system voltage of 3300 V has been selected.

The grid side filter L_{f} has been designed with an 8 % filter reactor and a filter capacitor C_{f} of 5 % (see table IV).

To implement some additional current limiting impedance versus the grid side, the common mode filter 30 has been designed as a tuned filter. This may be of special interest in case of low impedance grounded medium voltage grids 48. Additionally, this measure may allow the robust active damping of the grid side resonance frequency and harmonic rejection in all conditions with a reasonably low switching frequency.

The following table shows data for a tuned filter 30.

| | | |
|---|---|---|
| C_{f} | 16.7 | [µF] |
| L_{f2} | 1.05 | [mH] |
| R_{f} | 4 | [Ohm] |

Depending on the number of voltage levels and length of the cable 62, a dv/dt filter 88 at the machine side may be needed or not. For the investigation, a small dv/dt filter 88 on the machine side has been implemented. In case of an MMLC converter 42, the phase or branch reactors may serve as main inductors for the dv/dt filter 88, which requests only the addition of capacitive and resistive elements. In case of an ANPCML converter 42, separate inductive elements may be needed. The dv/dt filter 88 may increase the machine side capacitance to ground.

The following table shows data for a dv/dt filter 88.

| | | |
|---|---|---|
| Cf_dv/dt | 1 | [µF] |
| Lf_dv/dt | 25 | [uH] |
| R_dv/dt | 10 | [Ohm] |
| dv/dt | 130 | [V/us] |

The performance of the system 40 with the above selected data, especially in regards of common mode effects, is studied for low and high impedance grounded medium voltage grids 48.

### Grid side with low impedance grounding

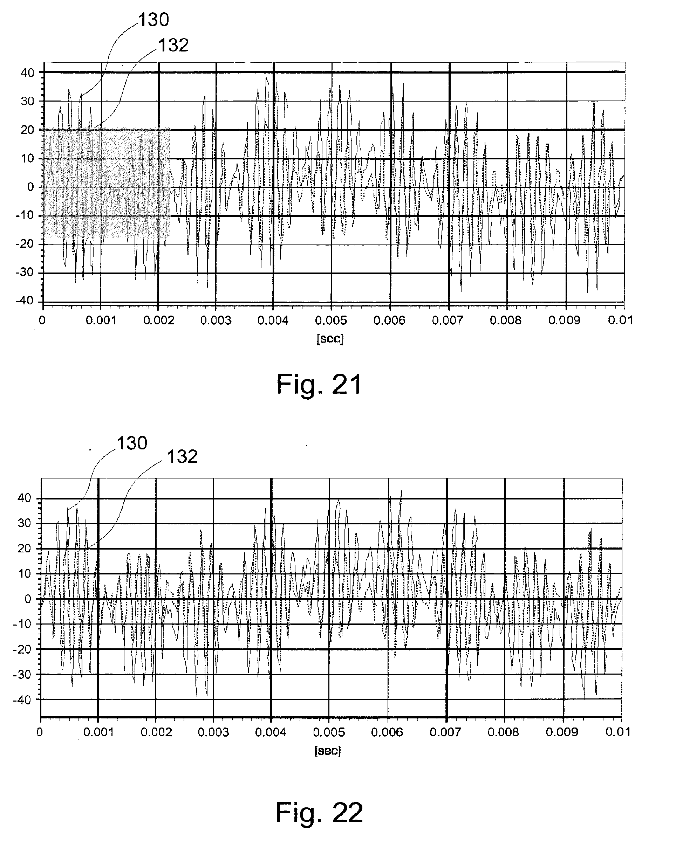

Fig. 21 shows a diagram with a common mode voltage 130 and a common mode current 132 at the grid side of a system 40. For the system 40, a low impedance grounding according to Fig. 1 with a neutral grounding resistor 16 has been chosen. In Fig. 21, like in the following diagrams, the current 132 and the voltage 130 are depicted over time.

In a low impedance grounded system 40, mainly the amplitude of the common mode current 132 has to be observed.

The current 132 will flow over the neutral grounding resistor 16 and is not allowed to thermally overload it. With the tuned filter 30, the following common mode current 132 and voltage 130 are observed at the grid side at the star point 32 of the filter 30 and in the neutral grounding resistor 80 of the grid 48:

| | |
|---|---|
| u_CM_filter_star_point | = 16.8 V rms (0.9 %) |
| i_CM_filter_star_point | = 11.0 A rms (5.5 %) |
| i_CM_ neutral_grounding | = 2.1 A rms (1.1 %) |

The common mode voltage 130 is low and below any limits given by standards. The common mode current 132 in the filter star point 32 looks quite high, but it must be taken into account, that 80 % of this current is closing its loop over the cable 62, the dv/dt filter 88, and the capacitance of the machine 60. Only 20 % of the common mode current 132 is actually flowing in the direction of the grid 48. This value of 20 % is defined by the chosen value for the low impedance grounding resistor 80. The thermal loading of the low impedance grounding resistor should be acceptable.

### Grid side with high impedance grounding

Fig. 22 shows a diagram with a common mode voltage 130 and a common mode current 132 at the grid side of a system 40. For the system 40, a high impedance grounding according to Fig. 2 with a neutral grounding resistor 16' has been chosen.

In a high impedance grounded system, mainly the amplitude of the common mode voltage 130 has to be observed, which is present for other parallel connected loads at the point of common coupling 46 or the grid connection 46.

With the tuned filter 30, the following common mode currents and voltages at the grid side are observed at the star point 32 of the filter 30 and in the neutral ground resistor 16' of the grid 48:

| | |
|---|---|
| u_CM_filter_star_point | = 18 V rms (1 %) |
| i_CM_filter_star_point | = 11.1 A rms (5.5 %) |
| i_CM_neutral_grounding | = 0.04 A rms (0.02 %) |

The common mode current 132 in the filter star point 32 is closing its loop over the cable 62 and the capacitance of the machine 60. Only 0.02 % of the common mode current 132 is flowing in the direction of the grid 48 (limited by the high impedance neutral grounding resistor 16'). Also in this case, the thermal load of the high impedance grounding resistor 16' is acceptable.

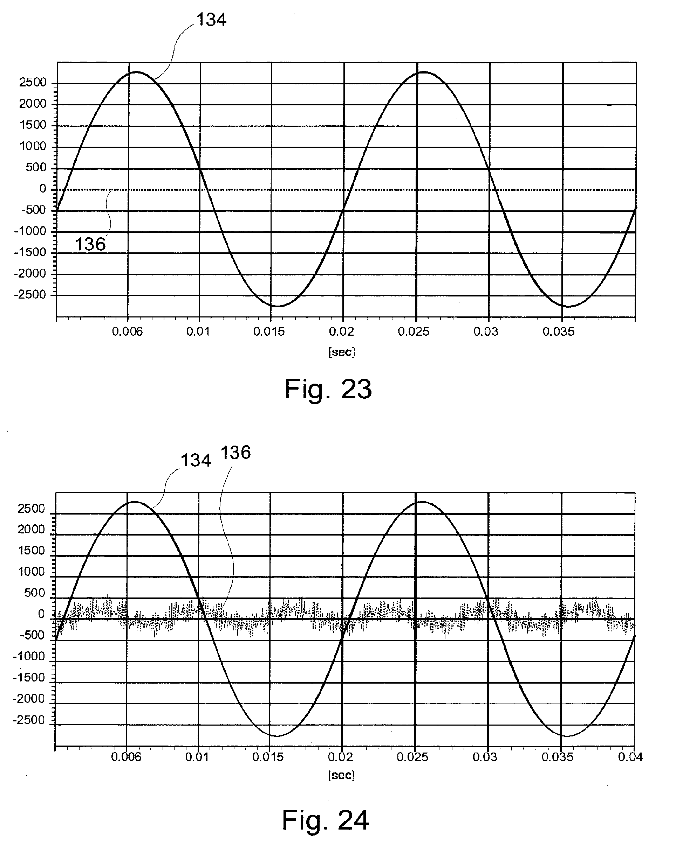

Fig. 23 shows a diagram comparing the phase voltage 134 with the common mode voltage 132. The common mode voltage 130 is low and below any limits given by standards.

### Machine side

Since in low and high impedance grounded systems 40 we have a similar small common mode voltage 130 at the grid side, there is also no major difference between the two cases in regards of the common mode stresses on the electrical machine 60.

Fig. 24 shows a diagram with the phase voltage 134 and the common mode voltage stress 136 at the star point of the electrical machine 60.

Fig. 24 shows the resulting common voltage stress on the machine side for the investigated seven-level converter 42. The common mode voltage stress 136 related to the star point of the machine 60 is substantially higher than at the star point 32 of the tuned filter 30 at the grid side. This is intended by design and acceptable for any standard machine 60, as will be explained in the following.

The common mode peak voltage 136 in the stator winding is below 500 V. It is important to separate the low frequency and the high frequency common mode voltages content of the total common mode voltage 136 appearing on the stator winding. Any low frequency common mode voltage movement of the stator winding is not transferred to the rotor shaft and is therefore not creating any bearing currents. At low frequencies the capacitive coupling to the rotor is not effective enough. This is for example relevant for any third order harmonic of a 50 or 60 Hz supply grid 48. At higher frequencies we get an effective capacitive coupling to the rotor shaft, where for a 1 MVA machine a transfer ratio of 0.02 (or 1:50) is assumed.

According to Fig. 24, about 100 V are caused by the low frequency third harmonic component, which leaves us with a maximum of 400 V high frequency peak voltage. Taking into account a ratio of 1:50 to the induced peak voltage at the rotor shaft, we get a common mode peak voltage in the rotor shaft of less than 10 V, which is within a safe design point in regards of potentially dangerous bearing currents. Even in case of the low output frequency operation of the modular multilevel converter 42, which generates additional low frequency common mode voltage stress on the machine side, a good behavior on machine side and grid side in regards of common mode voltage and currents, including bearing current effects, can be achieved.

Summarized, a new cost-effective transformerless medium voltage system 40 is proposed, which may comprise multiple VSI based multilevel converter 42, like an ANPCML converter 42 and an MMLC converter 42. Additional common mode impedances may be avoided without creating unacceptable common mode voltage 130 or current 132 on the grid side. Due to a small amount of high frequency common voltage 136 on the machine side, any dangerous bearing currents may be avoided.

A single processor or controller or other unit may fulfil the functions of several items recited in the claims.

## Claims

1. A medium voltage system (40), comprising:
a multilevel converter (42) connected to a grid connection (46), wherein the multilevel converter (42) is adapted for converting a first multiphase current provided at the grid connection (46) into a second current; and
a common mode filter (30), which, for each phase (44) of the first current, comprises a phase filter (54) connected to the respective phase (44);
wherein each phase filter (54) is connected to a common filter star point (32) which is connected to ground (18);
wherein each phase filter (54) comprises a capacity (C_{f}),
wherein each phase filter (54) comprises an inductivity (L_{f2}) connected in series with the capacity (C_{f}),
wherein each phase filter (54) comprises a resistor (R_{f}) connected in series with the capacity (C_{f}), whereby the inductivity (L_{f2}) and the resistor (R_{f}) are connected in parallel, and
wherein the common mode filter (30) comprises an impedance (Z_{N}) between the filter star point (32) and the ground (18).

2. The medium voltage system (40) of claim 1,
wherein the common mode filter (30), for each phase (44), comprises an inductivity (L_{f}) connected between the grid connection (46) and the multilevel converter (42).

3. The medium voltage system (40) of claim 2,
wherein a connection point of a phase filter (54) to the respective phase (44) is between the grid connection (46) and the inductivity (L_{f}) that is between the grid connection and the multilevel converter (42).

4. The medium voltage system (40) of one of the preceding claims, further comprising:
an electrical motor (60) for receiving the second current.

5. The medium voltage system (40) of one of the preceding claims, further comprising:
an electrical generator (68) for generating the second current.

6. The medium voltage system (40) of one of the preceding claims, further comprising:
a DC source (70, 120) for providing the second current.

7. The medium voltage system (40) of one of the preceding claims, further comprising:
a transformer (64) for transforming the second current.

8. The medium voltage system (40) of one of the preceding claims,
wherein the first multiphase current has two or three phases (44).

9. The medium voltage system (40) of one of the preceding claims,
wherein the multilevel converter (42) comprises an ANPCML converter.

10. The medium voltage system (40) of one of the preceding claims,
wherein the multilevel converter (42) comprises an indirect MMLC converter.

11. The medium voltage system (40) of one of the preceding claims,
wherein the multilevel converter (42) comprises a direct MMLC converter.

## Patentansprüche

1. Mittelspannungssystem (40), das umfasst:
einen Mehrpegel-Stromrichter (42), der an eine Stromnetzverbindung (46) angeschlossen ist, wobei der Mehrpegel-Stromrichter (42) zum Umwandeln eines ersten Mehrphasenstroms, der an der Stromnetzverbindung (46) bereitgestellt wird, in einen zweiten Strom ausgelegt ist; und
ein Gleichtaktfilter (30), das für jede Phase (44) des ersten Stroms ein Phasenfilter (54) umfasst, das an die entsprechende Phase (44) angeschlossen ist;
wobei jedes Phasenfilter (54) mit einem gemeinsamen Filtersternpunkt (32) verbunden ist, der mit Erde (18) verbunden ist;
wobei jedes Phasenfilter (54) eine Kapazität (C_{f}) umfasst,
wobei jedes Phasenfilter (54) eine Induktivität (L_{f2}) umfasst, die mit der Kapazität (C_{f}) in Reihe geschaltet ist;
wobei jedes Phasenfilter (54) einen mit der Kapazität (C_{f}) in Reihe geschalteten Widerstand (R_{f}) umfasst,
wobei die Induktivität (L_{f2}) und der Widerstand (R_{f}) parallel geschaltet sind, und
wobei das Gleichtaktfilter (30) eine Impedanz (Z_{N}) zwischen dem Filtersternpunkt (32) und der Erde (18) umfasst.

2. Mittelspannungssystem (40) nach Anspruch 1,
wobei das Gleichtaktfilter (30) für jede Phase (44) eine Induktivität (L_{f}) umfasst, die zwischen die Stromnetzverbindung (46) und den Mehrpegel-Stromrichter (42) geschaltet ist.

3. Mittelspannungssystem (40) nach Anspruch 2,
wobei ein Verbindungspunkt eines Phasenfilters (54) mit der entsprechenden Phase (44) zwischen der Stromnetzverbindung (46) und der Induktivität (L_{f}), die sich zwischen der Stromnetzverbindung und dem Mehrpegel-Stromrichter (42) befindet, liegt.

4. Mittelspannungssystem (40) nach einem der vorhergehenden Ansprüche, das ferner umfasst:
einen Elektromotor (60) zum Aufnehmen des zweiten Stroms.

5. Mittelspannungssystem (40) nach einem der vorhergehenden Ansprüche, das ferner umfasst:
einen elektrischen Generator (68) zum Erzeugen des zweiten Stroms.

6. Mittelspannungssystem (40) nach einem der vorhergehenden Ansprüche, das ferner umfasst:
eine Gleichstromquelle (70, 120) zum Bereitstellen des zweiten Stroms.

7. Mittelspannungssystem (40) nach einem der vorhergehenden Ansprüche, das ferner umfasst:
einen Transformator (64) zum Transformieren des zweiten Stroms.

8. Mittelspannungssystem (40) nach einem der vorhergehenden Ansprüche,
wobei der erste Mehrphasenstrom zwei oder drei Phasen (44) aufweist.

9. Mittelspannungssystem (40) nach einem der vorhergehenden Ansprüche,
wobei der Mehrpegel-Stromrichter (42) einen ANPCML-Stromrichter umfasst.

10. Mittelspannungssystem (40) nach einem der vorhergehenden Ansprüche,
wobei der Mehrpegel-Stromrichter (42) einen indirekten MMLC-Stromrichter umfasst.

11. Mittelspannungssystem (40) nach einem der vorhergehenden Ansprüche,
wobei der Mehrpegel-Stromrichter (42) einen direkten MMLC-Stromrichter umfasst.

## Revendications

1. Système moyenne tension (40), comprenant :
un convertisseur multiniveau (42) raccordé à un raccordement au réseau (46), lequel convertisseur multiniveau (42) est adapté à convertir un premier courant polyphasé fourni au niveau du raccordement au réseau (46) en un deuxième courant ; et
un filtre de mode commun (30) qui, pour chaque phase (44) du premier courant, comprend un filtre de phase (54) raccordé à la phase respective (44) ;
dans lequel chaque filtre de phase (54) est raccordé à un point étoile de filtre commun (32) qui est raccordé à la terre (18) ;
dans lequel chaque filtre de phase (54) comprend une capacité (C_{f}),
dans lequel chaque filtre de phase (54) comprend une inductance (L_{f2}) montée en série avec la capacité (C_{f}),
dans lequel chaque filtre de phase (54) comprend une résistance (R_{f}) montée en série avec la capacité (C_{f}), moyennant quoi l'inductance (L_{f2}) et la résistance (R_{f}) sont montées en parallèle, et
dans lequel le filtre de mode commun (30) comprend une impédance (Z_{N}) entre le point étoile de filtre commun (32) et la terre (18).

2. Système moyenne tension (40) selon la revendication 1,
dans lequel le filtre de mode commun (30), pour chaque phase (44), comprend une inductance (L_{f}) montée entre le raccordement au réseau (46) et le convertisseur multiniveau (42).

3. Système moyenne tension (40) selon la revendication 2,
dans lequel un point de raccordement d'un filtre de phase (54) à la phase respective (44) se situe entre le raccordement au réseau (46) et l'inductance (L_{f}) située entre le raccordement au réseau et le convertisseur multiniveau (42).

4. Système moyenne tension (40) selon l'une des revendications précédentes, comprenant en outre :
un moteur électrique (60) destiné à recevoir le deuxième courant.

5. Système moyenne tension (40) selon l'une des revendications précédentes, comprenant en outre :
un générateur électrique (68) destiné à générer le deuxième courant.

6. Système moyenne tension (40) selon l'une des revendications précédentes, comprenant en outre :
une source de courant continu (70, 120) destinée à fournir le deuxième courant.

7. Système moyenne tension (40) selon l'une des revendications précédentes, comprenant en outre :
un transformateur (64) destiné à transformer le deuxième courant.

8. Système moyenne tension (40) selon l'une des revendications précédentes,
dans lequel le premier courant polyphasé possède deux ou trois phases (44).

9. Système moyenne tension (40) selon l'une des revendications précédentes,
dans lequel le convertisseur multiniveau (42) comprend un convertisseur ANPCML.

10. Système moyenne tension (40) selon l'une des revendications précédentes,
dans lequel le convertisseur multiniveau (42) comprend un convertisseur MMLC indirect.

11. Système moyenne tension (40) selon l'une des revendications précédentes,
dans lequel le convertisseur multiniveau (42) comprend un convertisseur MMLC direct.
